# EUROPÄISCHE PATENTSCHRIFT

(11) **EP 3 389 238 B1**
(45) Veröffentlichungstag und Bekanntmachung des Hinweises auf die Patenterteilung: **16.02.2022**
(21) Anmeldenummer: 18000330.3
(22) Anmeldetag: 06.04.2018
(51) Int. Cl.: H04L 29/06, H04L 9/32, G06F 21/62

(54) **VERFAHREN ZUM SCHUTZ EINES VERNETZTEN MILITÄRISCHEN SYSTEMS**
METHOD FOR PROTECTING A NETWORKED MILITARY SYSTEM
PROCÉDÉ DE PROTECTION D'UN SYSTÈME MILITAIRE EN RÉSEAU

(30) Priorität: 12.04.2017 DE 102017003585; 12.07.2017 DE 102017006572
(43) Veröffentlichungstag der Anmeldung: 17.10.2018
(73) Patentinhaber: Diehl Defence GmbH & Co. KG, 88662 ÜBERLINGEN (DE)
(72) Erfinder: Gagel, Florian, DE - 88690 Uhldingen-Mühlhofen (DE); Selz, Andre, DE - 88662 Überlingen (DE); Koltes, Andreas, DE - 88662 Überlingen (DE); Kushauer, Jörg, DE - 88693 Deggenhausertal (DE)
(74) Vertreter: Diehl Patentabteilung

(56) Entgegenhaltungen:
- WO-A1-2017/042527
- Neil B Barnas: "Blockchains in national defense: Trustworthy systems in a trustless world", , 30. Juni 2016 (2016-06-30), Seiten 1-43, XP055500922, Internet Gefunden im Internet: URL:http://www.jcs.mil/Portals/36/Document s/Doctrine/Education/jpme_papers/barnas_n. pdf?ver=2017-12-29-142140-393 [gefunden am 2018-08-21]
- Duncan Riley: "DARPA wants someone to build the DoD a new secure Blockchain based messaging platform", , 25. April 2016 (2016-04-25), XP055434364, Gefunden im Internet: URL:https://siliconangle.com/blog/2016/04/ 25/darpa-wants-someone-to-build-the-dod-a- new-secure-blockchain-based-messaging-plat form/ [gefunden am 2017-12-12]
- CHRISTIDIS KONSTANTINOS ET AL: "Blockchains and Smart Contracts for the Internet of Things", IEEE ACCESS, Bd. 4, 3. Juni 2006 (2006-06-03), Seiten 2292-2303, XP011613134, DOI: 10.1109/ACCESS.2016.2566339 [gefunden am 2016-06-03]

## Beschreibung

Die Erfindung betrifft ein Verfahren zum Schutz eines vernetzten militärischen Systems gegenüber böswilligen Teilnehmern, bei dem Transaktionen zwischen Teilnehmern des vernetzten militärischen Systems in einer verteilten Datenbank gespeichert werden.

An einem vernetzten militärischen System sind viele verschiedene Akteure beteiligt, u. a. beispielsweise Beobachter, Aufklärer, Sensoren (z. B. Radar), Effektoren, Truppen im Einsatz, allgemeine Wirkmittel, Steuerungs- und Kommandozentralen. Alle diese Akteure stellen Teilnehmer des vernetzten militärischen Systems dar.

Innerhalb eines solchen vernetzten militärischen Systems finden unterschiedliche Transaktionen zwischen den Teilnehmern statt, angefangen beispielsweise von der Identifikation und Verifikation der jeweiligen Teilnehmer untereinander, Austausch von Informationen über Bedrohungen oder Ziele, Absetzung von Kommandos über Hierarchieebenen hinweg bis hin zur Bekämpfung des Gegners mittels Effektoren und anschließendes Damage-Assessment.

Es ist bekannt, vernetzte militärische Systeme zum Schutz vor böswilligen Teilnehmern, auch Intruder genannt, durch physikalische Vorrichtungen zu schützen oder ein solches System redundant auszulegen, so dass bei einem Ausfall ein Ersatzsystem übernehmen kann.

Die Verwendung der Blockchain-Technologie in einem vernetzten militärischen System zum Schutz vor böswilligen Teilnehmern ist beschrieben in:
Neil B Barnas: "Blockchains in national defense: Trustworthy systems in a trustless world", JPME-Papers, Joint Chief of Staff, US-Army, https://www.jcs.mil/Doctrine/Joint-Education/JPME-Papers

Eine weitere Darstellung der Verwendung von Blockchain-Technologie im militärischen Bereich ist bekannt aus:
Duncan Riley: "DARPA wants someone to build the DoD a new secure Blockchain based messaging platform" siliconangle [the voice of enterprise and emerging tech], https://siliconangle.com/2016/04/25/darpa-wants-someone-to-build-the-dod-a-newsecure-blockchain-based-messaging-platform

Es ist eine Aufgabe der Erfindung, ein Verfahren zum Schutz eines vernetzten militärischen Systems gegenüber einem böswilligen Teilnehmer anzugeben, der es insbesondere über bestehende physikalische Sicherungsmechanismen hinweg geschafft hat, Teilnehmer des Systems zu werden.

Diese Aufgabe wird durch ein Verfahren gemäß den Merkmalen von Patentanspruch 1 gelöst, bei dem die Transaktionen in Blöcken gespeichert werden und nur in einem Grundblock verzeichnete Teilnehmer und zugelassene Neuteilnehmer solche Datenblöcke erzeugen dürfen, wobei ein noch nicht im Netzwerk zugelassener Teilnehmer nur dann im Netzwerk als neuer Teilnehmer zugelassen wird, wenn ein zur Neuaufnahme befugter und als solcher in einem Grundblock verzeichneter Teilnehmer den neuen Teilnehmer zulässt.

Die Erfindung geht von der Überlegung aus, dass viele Transaktionen zwischen den Teilnehmern eine Authentifizierung der beteiligten Teilnehmer sowie eine genaue Protokollierung der Transaktionen zwecks Reproduzierbarkeit voraussetzen.

Die Erfindung geht weiter von der Überlegung aus, dass aus Gründen der Robustheit gegenüber feindlichen Aktionen dezentrale Systeme von Vorteil sind, denn dies erlaubt auch einen Ausfall eines Teils des kompletten vernetzen militärischen Systems, ohne dass hierdurch die Gesamtfunktionalität in Mitleidenschaft gezogen bzw. die durchgeführte oder durchzuführende Operation gefährdet würde.

Die Erfindung erkennt, dass ein Nachteil bei verteilten Systemen das Vertrauen der Teilnehmer zueinander ist, da auch damit gerechnet werden muss, dass Intruder / Saboteure einzelne Teilnehmer übernommen haben und dadurch als böswillige Teilnehmer fungieren können. Ein solcher böswilliger Teilnehmer kann bisher sowohl schädliche Transaktionen auslösen als auch bei entsprechendem Zugang die Protokollierung von Transaktionen nachträglich verfälschen.

Zur Lösung dieses Problems ist es bekannt, dass Transaktionen vorbestimmter Kategorien, insbesondere alle Transaktionen eines solchen dezentralen Netzwerks, also des vernetzten militärischen Systems, in einer verteilten Datenbank gespeichert werden. Eine solche verteilte Datenbank wird nachfolgend auch als "Blockchain" bezeichnet.

Es ist insofern die Datenbank bei mehreren Teilnehmern gespeichert. Hierbei kann die gesamte Datenbank bei allen oder einigen Teilnehmern gespeichert sein. Sinnvoll ist es hierbei, dass sie für einen vorbestimmten Teilnehmerkreis, insbesondere für alle Teilnehmer einsehbar ist. Auf diese Weise können die Teilnehmer durch Zugriff auf die Datenbank frühere Transaktionen nachvollziehen oder anhand früherer Transaktionen neue Transaktionen verifizieren.

Eine andere Möglichkeit besteht darin, dass die Datenbank auf mehrere Teilnehmer aufgeteilt ist, sie also nicht in Gänze bei jeweils den Teilnehmern hinterlegt ist, sondern zumindest bei einigen Teilnehmern nur in Teilen. Auch hierbei sollte die Datenbank durch Zugriff auf die Teile insgesamt für die Teilnehmer abrufbar sein.

Die Erfindung ist vorteilhaft anwendbar für alle denkbaren Teilnehmer eines vernetzten militärischen Systems, auch Personen und Fahrzeuge, insbesondere Luft- und/oder Wasserfahrzeug. Teilnehmer können eine oder mehrere Datenverarbeitungsanlagen in einem Gebäude sein, mobile Kommunikationsgeräte, wie Smart Phones oder andere rechnerbasierten Handgeräte, Flugkörper, Geschosse und/oder Waffen. Im Folgenden werden die gewünschten beziehungsweise korrekten Teilnehmer des vernetzten militärischen Systems, generell auch als Netzwerk bezeichnet, als "Teilnehmer" bezeichnet, oder auch als autorisierte oder zugelassene Teilnehmer, und böswillige Teilnehmer als "Intruder" oder "böswillige Teilnehmer".

Besonders vorteilhaft ist die Erfindung anwendbar auf ein Luftverteidigungssystem. Dieses kann als die Teilnehmer ein taktisches Operationszentrum (TOC), zumindest ein Sensorsystem zur Luftüberwachung - beispielsweise ein Radarsystem - und zumindest ein Effektorsystem, wie beispielsweise einen Launcher zum Starten von Boden-Luft-Flugkörpern, ein Hochenergielasersystem oder ein geschützbasiertes Effektorsystem, zur Abwehr von Bedrohungen, z. B. Flugobjekten, umfassen. Einer Störung eines solchen militärischen Systems kann entgegengewirkt werden, sodass eine zuverlässige Luftverteidigung erreicht wird.

Eine Transaktion kann zwischen zwei Netzwerkteilnehmern ausgetauschte Information sein. Insbesondere ist jede zwischen zwei Netzwerkteilnehmern ausgetauschte Information eine Transaktion. Bei den Transaktionen kann es sich beispielsweise insbesondere um die Registrierung eines neuen Teilnehmers, eine Autorisierung eines Teilnehmers oder eine Übertragung von Rechten etwa einer Kommandozentrale an eine andere Kommandozentrale sein. Vorteilhafterweise können anhand der gespeicherten Transaktionen jegliche Aktionen vorbestimmter Kategorien innerhalb des Netzes, also innerhalb des vernetzten militärischen Systems, insbesondere alle Aktionen, von allen Teilnehmern jederzeit überprüft und nachvollzogen werden - der intakte Netzzugang sei hierbei vorausgesetzt.

Insbesondere umfassen die Transaktionen zumindest Information aus der Gruppe:
- von einem Sensorsystem erfasste Bewegungsdaten von Bedrohungen wie bspw. Flugobjekten, sogenannte Trackdaten,
- Abschüsse oder Feuerbefehle,
- Identifikation von Bedrohungen wie Flugobjekte, insbesondere Flugzeugen oder Flugkörpern,
- Zuweisung eines Ziels an ein Effektorsystem, z. B. einen Launcher,
- Anmeldedaten von Teilnehmern im Netzwerk,
- Zustände von Teilnehmern,
- geografische Orte von Teilnehmern,
- Netzwerkregeln.

Geschickterweise wird die Integrität der verteilten Datenbank über vorgegebene Algorithmen von den Teilnehmern verifiziert. Hierdurch ist sie sicher gegen Manipulationen einzelner böswilliger Teilnehmer. Eine solche Manipulation würde zur sofortigen Identifizierung eines Intruders und zum Ausschluss einer oder mehrerer mit ihm verbundenen Systemkomponenten führen, ohne dass jedoch das verteilte Hauptsystem beziehungsweise Netzwerk mit Teilnehmern dadurch in seiner Operation eingeschränkt wäre.

Eine Möglichkeit für einen solchen Überprüfungsalgorithmus enthält, dass die Transaktionen in hintereinander angereihten Blöcken gespeichert werden. Entsprechend der Erfindung ist deren Inhalt miteinander vernetzt, wobei die Vernetzung in der Weise geschieht, dass in einem Block ein aus zumindest einem vorangegangen Block gebildeter Prüfcode gespeichert ist. Der Prüfcode kann eine Prüfsumme sein. Der

Prüfcode kann mittels Hashing ermittelt werden, sodass im Block ein Hashwert aus den Informationen aus zumindest einem vorangegangen Block hinterlegt ist. Eine solche Aneinanderreihung von Datenblöcken ist aus der Blockchain-Technologie bekannt.

Hierbei kann es als Regel im Netzwerk festgelegt sein, dass eine Transaktion unter den Teilnehmern als wahr angesehen wird, wenn die Transaktion in einem Block gespeichert und der Block an eine Kette von Blöcken angehängt ist. Wenn Verzweigungen der Kette möglich sind, kann als wahr der Inhalt der Blöcke der längsten Kette angesehen werden. Die Teilnehmer einigen sich insofern darauf, dass solche Transaktionen, generell auch als Informationen bezeichnet, wahr sind, unabhängig von ihrem sachlichen Wahrheitsgehalt. Das Anhängen eines Blocks kann durch das Einfügen des Prüfcodes in den Block erfolgen, der damit die Position des Blocks in der Kette eindeutig angibt.

Die Verwendung der Blockchain-Technologie eröffnet neue Möglichkeiten, durch die die verteilte Datenbank, also die dezentrale Transaktionsdatenbank, von allen Teilnehmern jederzeit überprüft werden kann. Dadurch ist das Gesamtsystem, also das vernetzte militärische System, auch bei Ausfall bzw. Ausschluss einzelner Teilnehmer weiterhin funktionsfähig und nicht mehr abhängig von einem zentralen Knoten, der derzeit auch oft redundant ausgelegt wird, um die benötigte Einsatzsicherheit zu gewährleisten. Von Vorteil ist es, dass die Transaktionen selbst in sehr kurzer Zeit sowohl gespeichert als auch verifiziert werden, weiterhin können Manipulationen einzelner böswilliger Teilnehmer sofort erkannt werden. Darüber hinaus ist das Verfahren, entsprechende Rechenleistung vorausgesetzt, sehr schnell, Transaktionen können innerhalb von Millisekunden ablaufen.

Die Verwendung von Blockchain-Technologie für vernetzte militärische Systeme, also die Abspeicherung aller Transaktionen zwischen Teilnehmern des vernetzten militärischen Systems in einer verteilten Datenbank, stellt einerseits einen zusätzlichen Sicherheitsmechanismus zur Absicherung von Transaktionen und Erkennung böswilliger Teilnehmer bereit und ermöglicht andererseits auch eine dezentrale Verteilung der Protokollierungsdatenbank. Diese ist gegen Ausfall einzelner Teilnehmer abgesichert und kann nicht von böswilligen Teilnehmern manipuliert werden.

Es ist also zweckmäßig, dass Transaktionen innerhalb des vernetzten militärischen Systems dezentral in einer Blockchain abgespeichert werden. Teilnehmende Stationen beziehungsweise Netzwerkteilnehmer können dabei gleichzeitig als Knoten agieren und ihre eigene Kopie der Blockchain-Datenbank halten. Diese Knoten verifizieren dabei vorteilhafterweise zusätzlich die Transaktionen innerhalb des Netzes. Dies kann durch öffentliche Schlüssel der Teilnehmer geschehen.

Generell sind die Teilnehmer vorteilhafterweise mit einem privaten Schlüssel ausgestattet, der zweckmäßigerweise geheim ist und insofern nur dem einen Teilnehmer bekannt ist, dem der private Schlüssel gehört. Aus dem privaten Schlüssel kann ein öffentlicher Schlüssel erzeugt werden, der einigen oder allen anderen Netzteilnehmern veröffentlicht wird. Transaktionen werden zweckmäßigerweise verschlüsselt im Netzwerk veröffentlicht. Die Verschlüsselung geschieht hierbei zweckmäßigerweise mit dem privaten Schlüssel. Durch den öffentlichen Schlüssel kann die Transaktion entschlüsselt werden. Da dieser öffentlich ist, kann jeder Teilnehmer die Transaktion entschlüsseln. Mit der Entschlüsselung und insbesondere der Prüfung, dass die Entschlüsselung mit dem öffentlichen Schlüssel desjenigen Teilnehmers erfolgte, der die Transaktion versendet hat, kann die Transaktion als verifiziert erkannt werden.

Je nach Fundamentalregel innerhalb des Netzwerks kann eine Information beziehungsweise Transaktion als verifiziert gelten, wenn die Mehrheit der Teilnehmer im Netz die Verifikation bestätigt (siehe auch "Byzantinische Generäle" bzw. "Byzantinischer Fehler"). Eine andere Möglichkeit besteht darin, dass derjenige Teilnehmer, der den aktuellen Block erzeugt hat und diesen mit Daten der Transaktionen füllt, die Transaktionen verifiziert und die verifizierten Daten im Block hinterlegt. Ist der Block an die Blockkette angehängt, kann die Transaktion als wahr angesehen werden und wird als unverfälschbare Grundwahrheit in der Blockchain gespeichert.

Bei der Verwendung von aneinander gereihten Datenblöcken kann es eine Weile dauern, bis eine Transaktion in einem aktuellen Block hinterlegt ist und dieser an die vorhandene Blockkette angehängt ist. Erst dann gilt die Transaktion als wahr und damit als vollständig belastbar. Dies gilt unabhängig von der Art der Blockerzeugung durch sogenanntes Mining (Proof of Work) oder eine algorithmische Zuweisung einer Blockerzeugung (Proof of Stake). In einem militärischen System, insbesondere einem Luftverteidigungssystem, kann es jedoch notwendig sein, sehr schnell auf Bedrohungen oder andere Informationen zu reagieren. Es ist daher die Frage zu klären, wann eine Transaktion, beispielsweise ein Feuerbefehl zum Bekämpfen eines anfliegenden Flugkörpers, als belastbar angesehen wird und somit durchgeführt werden sollte.

Im Folgenden wird daher unterschieden zwischen einer ungeprüften Transaktion, einer verifizierten Transaktion und deren Anerkennung als wahr. Eine ungeprüfte Transaktion ist beispielsweise der Feuerbefehl an sich. Verifiziert ist er, wenn er - z.B. vom Adressaten, in diesem Beispiel einem Launcher zum Starten einer Boden-Luft-Rakete - geprüft wurde, beispielsweise durch die Entschlüsselung mit dem öffentlichen Schlüssel des Absenders. Wahr wird eine Transaktion wenn sie in einem Block enthalten ist, der an die Blockkette angehängt wurde. Es ist jedoch ausreichend, wenn eine nur verifizierte Transaktion als ausführbar anerkannt wird, auch wenn sie also noch nicht Teil der Blockkette ist. Die Verifizierung ist sehr schnell ausführbar, sodass Befehle ausreichend schnell umgesetzt werden können.

Wird die Verifizierung jedoch nicht oder nicht in vorbestimmter Weise zufriedenstellend erreicht, so wird die Information aus der Transaktion als nicht ausführbar, oder allgemeiner: nicht seriös, eingestuft. Ein Absender kann überprüft und womöglich aus dem System ausgeschlossen werden. Ein Ausschluss eines Teilnehmers wird von allen anderen Teilnehmer registriert, ohne dass die eigene Operationsfähigkeit oder die des Systems beeinträchtigt wird, was zu einer weiteren Robustheit des Gesamtsystems führt.

Zum Aufbau eines dezentralen Blockketten-Netzwerks ist es sinnvoll, eine sichere Grundkonfiguration zu erstellen. Zweckmäßigerweise wird unantastbare Grundinformationen in einen Grundblock eingefügt. Entsprechend der Erfindung ist der Grundblock der erste Block der Blockkette sein. Er kann auch aus mehreren Blöcken bestehen, die am Anfang einer Blockkette stehen. Dieser Grundblock sollte Grundinformation zu den Teilnehmern enthalten und in einer Umgebung erstellt werden, die geschützter als eine spätere reguläre Betriebsumgebung ist. Dem unerwünschten Einschleppen von Falschinformation durch einen Intruder kann hierdurch entgegengewirkt werden.

In einem Grundblock sollte eine Grundgruppe von Teilnehmern definiert werden, also eine Gruppe autorisierter beziehungsweise zugelassener Teilnehmer.

Eine Möglichkeit zur Bildung einer geschützten Umgebung kann das verkabelte Vernetzen der Teilnehmer bei der Erstellung des Grundblocks sein. Ein Eingriff von außen in das Netzwerk hinein wird hierdurch erschwert. Vorteilhafterweise sind die verkabelten Grundteilnehmer bei der Erstellung des Grundblocks in einem einzigen Gebäude. Auf diese Weise kann ein nach außen abgeschlossenes Kabelnetzwerk gebildet werden, in das ein Eindringen extrem schwierig ist.

Eine weitere Möglichkeit zur Bildung einer geschützten Umgebung bei der Erstellung des Grundblocks kann geschaffen werden, indem sich die Grundgruppe erst nach Erstellen des Grundblocks miteinander vernetzt. Der Grundblock kann von einem einzigen Grundteilnehmer gebildet werden, beispielsweise einer Kommandozentrale beziehungsweise einem Tactical Operation Center (TOC), insbesondere ohne eine vorhandene Vernetzung mit einem Drahtlosnetzwerk oder einem Netzwerk außerhalb des Gebäudes, in dem sich die Kommandozentrale befindet.

Die Teilnehmer vernetzen sich vorteilhafterweise zum Austausch von Zertifikaten, wie beispielsweise ihre öffentlichen Schlüssel, in einer geschützten Umgebung, z. B. in einem Depot. Die Vernetzung erfolgt dabei geschickterweise über ein geschütztes Medium, wie beispielsweise eine kabelgebundene Verbindung. Die geschützte Umgebung weicht also von der regulären Betriebsumgebung ab, so wie auch das Medium zur Vernetzung abweichen kann. In der regulären Betriebsumgebung können sowohl Drahtlosnetzwerke als auch Verkabelungen oder beides zum Einsatz kommen. Es kann eine sichere Grundkonfiguration erstellt werden, nach deren Erstellung und sicheren Hinterlegung in Blöcken erst der reguläre Betrieb bspw. mit einem Drahtlosnetzwerk beginnt. Einer bereits anfänglichen unerwünschten Beeinflussung von Grunddaten kann entgegengewirkt werden.

Ebenfalls vorteilhaft ist es, wenn sich die Teilnehmer zunächst verkabelt miteinander vernetzen und Zertifikate austauschen, beispielsweise ihre öffentlichen Schlüssel austauschen, und dann zwischen zumindest einem Teil der Teilnehmer die Verkabelung gelöst und ein Drahtlosnetzwerk zwischen diesen Teilnehmern aufgebaut wird.

Wenn die Transaktionen in Blöcken gespeichert werden, ist es sinnvoll, wenn die Blöcke nach einem festgelegten Algorithmus erstellt werden. Diese Regel ist zweckmäßigerweise in einem Grundblock festgelegt. Anstelle eines Minings ist das Verfahren des Proof of Stake vorteilhaft, wobei der Begriff des Stakes sich nicht auf materielle Anteile am Netzwerk beschränken muss, beispielsweise Anteile der Rechenkraft des Netzwerks.

Der Algorithmus teilt die Rechte zur Blockerstellung unter den Teilnehmern zweckmäßigerweise anteilig auf. So erhält zum Beispiel jeder Teilnehmer einen Anteil an den gesamten Erstellungsrechten, der ihm mit dem Algorithmus dann während des Betriebs de facto statistisch zuerteilt wird. Erhält beispielsweise ein Teilnehmer 5% der Erstellungsrechte zur Erstellung von Blöcken, so wird er im Laufe des regulären Betriebs statistisch gesehen tatsächlich etwa 5% der Blöcke erstellen, wobei der Wert kurzzeitig auch erheblich davon abweichen kann.

Ein sinnvoller Ansatz zum Verteilen der Anteile unter den Teilnehmern ist die Bemessung unter Verwendung der Datensicherheit der einzelnen Teilnehmer. Ein datensicherer Teilnehmer, beispielsweise eine Kommandozentrale, erhält einen höheren Anteil als ein weniger sicherer Teilnehmer. Auch ein Verkabelungszustand kann in der Zuteilung der Anteile berücksichtigt werden, sodass beispielsweise ein Teilnehmer, der im Netzwerk mit zumindest einem weiteren Teilnehmer verkabelt ist, einen höheren Anteil erhält, als ein nur drahtlos mit den anderen Netzteilnehmern verbundener Teilnehmer, und insbesondere ein ausschließlich im Netzwerk verkabelter Teilnehmer höhere Anteile erhält als ein teilweise verkabelter und teilweise drahtlos mit Teilnehmern verbundener Teilnehmer.

Weiter ist es vorteilhaft, wenn der Algorithmus die Rechte zur Blockerstellung nach einem Pseudo-Random-Verfahren verteilt. Ein solches Verfahren legt die einzelnen Blockerstellungsrechte zwar deterministisch fest, lässt sich jedoch von außen - ohne Kenntnis eines Erstellungsparameters - nicht vorhersagen, erscheint also von außen als Random-Verfahren. Hierbei ist es zweckmäßig, wenn die Zuteilung der einzelnen Rechte, also zur Erstellung eines Blocks, für jeden Teilnehmer nachvollziehbar ist, da die Zuteilung hierdurch überprüfbar ist. Vorteilhafterweise ist die Zuteilung der einzelnen Erstellungsrechte für jeden Teilnehmer im Voraus mit einer Sicherheit von durchschnittlich mehr als 50% berechenbar, wodurch eine Überprüfbarkeit von außen erhöht wird.

Bei einem abgeschlossenen Blockketten-Netzwerk ist es sinnvoll, die Grenzen nach außen eindeutig zu definieren, um ein unerlaubtes Eindringen eines Intruders zu verhindern oder zumindest zu erschweren. Eine besonders rigorose Abgrenzung nach außen kann erfolgen, wenn die Transaktionen in Blöcken abgelegt werden und nur in einem Grundblock verzeichnete Teilnehmer solche Datenblöcke erzeugen dürfen. Ein Hinzufügen von neuen Teilnehmern ist hierdurch nicht möglich, sodass die ursprünglichen Teilnehmer des Netzwerks unter sich bleiben. Die kann besonders bei militärischen Systemen von Vorteil sein. Eine größere Variabilität des Netzwerks unter Aufweichen der Rigorosität der Außengrenzen kann erreicht werden, wenn Neuteilnehmer in das Netzwerk eintreten können, jedoch erst nach einem vorbestimmten Zulassungsverfahren als zugelassenen Neuteilnehmer im Netzwerk zugelassen werden. Das Zulassungsverfahren ist zweckmäßigerweise in einem Grundblock der Blockkette wiedergegeben.

Durch die Erfindung wird eine besonders sichere Möglichkeit zur Zulassung eines neuen Teilnehmers im Netzwerk beziehungsweise System geschaffen, indem ein noch nicht im Netzwerk zugelassener Teilnehmer nur dann im Netzwerk als neuer Teilnehmer zugelassen wird, wenn ein zur Neuaufnahme befugter Teilnehmer den neuen Teilnehmer zulässt. Ein zur Neuaufnahme befugter Teilnehmer ist zweckmäßigerweise ein Teilnehmer, der hinsichtlich seiner Datensicherheit besser nach außen abgeschirmt ist, als der Durchschnitt der übrigen Teilnehmer, insbesondere am besten abgeschirmt ist.

Die Sicherheit bei der Neuaufnahme von Teilnehmern kann erhöht werden, wenn ein noch nicht im Netzwerk zugelassener Teilnehmer nur dann im Netzwerk als neuer Teilnehmer zugelassen wird, wenn mehrere zur Neuaufnahme befugte Teilnehmer den neuen Teilnehmer einstimmig zulassen.

Gemäß der Erfindung ist der zur Neuaufnahme befugte Teilnehmer als solcher in einem Grundblock verzeichnet. Hierdurch kann einer nachträglichen Manipulation einer Neuaufnahme entgegengewirkt werden. Eine weitere Absicherung gegen ein Hacking eines zur Neuaufnahme befugten Teilnehmers kann erreicht werden, wenn die Entscheidung zur Neuaufnahme eines Teilnehmers von einer oder mehreren hierfür befugten Personen einstimmig getroffen wird. Die Befugnis beziehungsweise eine Regel, die der Befugnis zugrunde liegt, kann in einem Grundblock hinterlegt sein.

Um die Sicherheit gegen unbefugtes Eindringen weiter zu erhöhen, kann vorgesehen sein, dass ein neuer Teilnehmer nur dann im Netzwerk als zugelassener Teilnehmer zugelassen wird, wenn zumindest eine Plausibilitätsprüfung zum neuen Teilnehmer unter Verwendung von Informationen aus Blöcken einer Blockkette positiv ist.

Transaktionen beziehungsweise im Netzwerk ausgetauschte Informationen, die in einem Block hinterlegt und im Block an eine Blockkette angehängt sind, gelten zweckmäßigerweise als wahr. Um sachliche Unwahrheiten nicht als Wahrheiten in die Blockkette gelangen zu lassen, ist es vorteilhaft, wenn die Transaktionen in Blöcken gespeichert werden und nur Daten von in einem Grundblock verzeichneten Teilnehmern und - wenn es zugelassene Neuteilnehmer gibt - von diesen zugelassenen Neuteilnehmern in diese Datenblöcke eingefügt werden dürfen. Information von nicht zugelassenen Teilnehmern im Netzwerk können zwar ausgetauscht werden, erreichen jedoch nicht den Status einer Wahrheit.

Die Kommunikation im Netzwerk beziehungsweise System und/oder Handlungsweisen von Teilnehmern können durch Regeln festgelegt werden. Hierbei ist es zweckmäßig, zwischen Fundamentalregeln und dynamischen Regeln zu unterscheiden. Eine Fundamentalregel kann eine unabänderliche Regel sein, wohingegen eine dynamische Regel änderbar, neu erzeugbar und/oder verwerfbar ist. Eine Fundamentalregel, insbesondere alle Fundamentalregeln, sind als solche gekennzeichnet. Zweckmäßigerweise sind sei in einem Grundblock hinterlegt.

Weiter ist es zweckmäßig, wenn zumindest eine Fundamentalregel die Erstellung dynamischer Regeln definiert, sodass diese gegen Manipulation geschützt werden. Ein Schutz gegen die Manipulation von Fundamentalregeln kann verbessert werden, wenn Fundamentalregeln des Netzwerks in/bei zumindest einem Teilnehmer hardwaregespeichert sind.

Um eine Fundamentalregel zu schützen ist es weiter vorteilhaft, wenn sich die Teilnehmer vernetzen, beispielsweise zur ersten Erstellung des Netzwerks beziehungsweise Systems, und eine in einem Teilnehmer gespeicherte Fundamentalregel bei der Erstellung eines Grundblocks in diesen eingefügt wird. Eine Änderung der Fundamentalregel kann hierdurch verhindert werden.

Die Erfindung ist außerdem gerichtet auf ein vernetztes militärisches System mit mehreren Teilnehmern, bei dem Transaktionen der Teilnehmer untereinander in einer verteilten Datenbank gespeichert sind. Die Datenbank kann auf die Teilnehmer aufgeteilt sein. Zweckmäßigerweise ist die Datenbank bei einer Mehrzahl von Teilnehmern, insbesondere bei allen Teilnehmern, jeweils vollständig gespeichert. Das System ist dazu ausgeführt, das erfindungsgemäße Verfahren durchzuführen.

Die bisher gegebene Beschreibung vorteilhafter Ausgestaltungen der Erfindung enthält zahlreiche Merkmale, die teilweise in einigen abhängigen Ansprüchen zu mehreren zusammengefasst wiedergegeben sind. Die Merkmale können jedoch zweckmäßigerweise auch einzeln betrachtet und zu sinnvollen weiteren Kombinationen zusammengefasst werden, insbesondere bei Rückbezügen von Ansprüchen, so dass ein einzelnes Merkmal eines abhängigen Anspruchs mit einem einzelnen, mehreren oder allen Merkmalen eines anderen abhängigen Anspruchs kombinierbar ist. Außerdem sind diese Merkmale jeweils einzeln und in beliebiger geeigneter Kombination sowohl mit dem erfindungsgemäßen Verfahren als auch mit der erfindungsgemäßen Vorrichtung gemäß den unabhängigen Ansprüchen kombinierbar. So sind Verfahrensmerkmale auch als Eigenschaften der entsprechenden Vorrichtungseinheit gegenständlich formuliert zu sehen und funktionale Vorrichtungsmerkmale auch als entsprechende Verfahrensmerkmale. Der beanspruchte Schutzbereich wird durch die Ansprüche definiert.

Die oben beschriebenen Eigenschaften, Merkmale und Vorteile dieser Erfindung sowie die Art und Weise, wie diese erreicht werden, werden klarer und deutlicher verständlich in Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: ein vernetztes militärisches System in Form eines Luftverteidigungssystems,
- FIG 2: ein Schema eines Aufbaus des vernetzten militärischen Systems in einem Gebäude,
- FIG 3: ein Schema eines Aufbaus eines anderen vernetzten militärischen Systems durch Anfragen von einer Kommandozentrale aus und
- FIG 4: ein Schema einer Kommunikation des vernetzten militärischen Systems aus FIG 3 während seines regulären Betriebs.

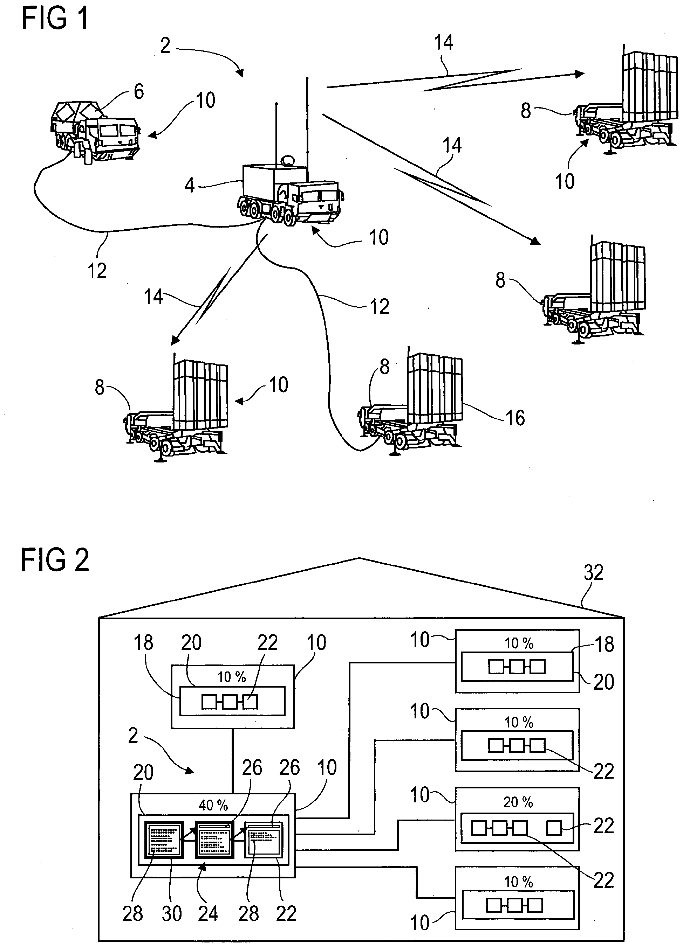

FIG 1 zeigt ein vernetztes militärisches System 2, das im Folgenden auch vereinfacht und generalisiert als Netzwerk 2 bezeichnet wird. Das System 2 umfasst eine Kommandozentrale 4, auch Technical Operation Centre (TOC) genannt, das über ein Glasfaserkabel 12 mit einem Sensorsystem in Form eines Radarsystems 6 verbunden ist. Das Radarsystem 6 dient zur Luftraumüberwachung und bildet mit der Kommandozentrale 4 und einer Mehrzahl von Effektorsystemen in Form von Launchern 8 ein vernetztes Luftverteidigungssystem. In diesem vernetzten militärischem System 2 bzw. Luftverteidigungssystem bilden die Kommandozentrale 4, das Radarsystem 6 und die Launcher 8 Teilnehmer 10 des Netzwerks 2.

Die Launcher 8 sind über eine große Fläche verteilt, um ein großes Areal gegen Luftangriffe verteidigen zu können. Einer der Launcher 8 steht jedoch in der Nähe der Kommandozentrale 4 und ist mit ihr über ein Glasfaserkabel 12 - generell: Datenkabel
- verbunden, wie auch das Radarsystem 6 mit der Kommandozentrale 4 verbunden ist.

Die übrigen Launcher 8 stehen weit entfernt von der Kommandozentrale 4 und sind mit dieser über eine Drahtlosverbindung 14 verbunden, wie in FIG 1 durch die gezackten Pfeile dargestellt ist. Die Launcher 8 umfassen mehrere Kanister 16, aus welchen ein oder mehrere Boden-Luft-Flugkörper gestartet werden können zum Abfangen eines anfliegenden Flugkörpers. Die Steuerung der Launcher 8 erfolgt von der Kommandozentrale 4 aus, die die Steuerung der Launcher 8 in einer Fernsteuerung übernommen hat, sodass das Personal der einzelnen Launcher 8 von der Bedienung der Launcher 8 befreit ist und lediglich in einiger Entfernung zum jeweiligen Launcher 8 zu dessen Verteidigung postiert ist. Alle Teilnehmer 10 sind mobil ausgeführt und insofern auf Fahrzeuge gesetzt, sodass sie schnell verlegbar sind und im Bedarfsfall auch zügig vor Angriffen fliehen können.

Das Netzwerk 2 ist ein nach außen abgeschlossenes Netzwerk, in dem die Teilnehmer 10 miteinander kommunizieren, ansonsten jedoch kein weiterer Teilnehmer Zugang zu diesem Netzwerk 2 hat. Eine Vernetzung nach außen besteht zwar durch die Kommandozentrale 4, allgemein gesprochen durch einen zentralen Teilnehmer 10, wobei jedoch eine Kommunikation von außerhalb des Netzwerks 2 mit einem der Teilnehmer 10, ausgenommen des zentralen Teilnehmers 10, nicht möglich ist. Eine solche Kommunikation wäre nur durch ein unerlaubtes Eindringen eines böswilligen Teilnehmers in das Netzwerk 2 möglich.

Für ein unerlaubtes Eindringen bestehen generell zwei Möglichkeiten, die im Folgenden vereinfacht als Softwareeinbruch und Hardwareeinbruch bezeichnet werden. Bei einem Hardwareeinbruch wird Hardware durch einen böswilligen Teilnehmer übernommen, beispielsweise wird ein Launcher durch eine Gruppe feindlicher Fallschirmjäger erobert und von dieser weiter betrieben, ohne dass die übrigen Teilnehmer 10 des Netzwerks 2 von einem solchen Einbruch Kenntnis erlangen. Bei einem Softwareeinbruch dringt ein böswilliger Teilnehmer durch eine Programmierungs- und/oder Kommunikationsaktivität unerlaubterweise in das Netzwerk 2 ein. Ein solches Hacking kann aus der Ferne und ohne die materielle Übernahme eines Teilnehmers 10 erfolgen.

Zum Schutz gegen ein unerlaubtes Eindringen eines böswilligen Teilnehmers in das Netzwerk 2 ist das Netzwerk 2 mit einer verteilten Datenbank 20 (FIG 2) ausgerüstet, deren Inhalt ganz oder zumindest teilweise auf mehrere Teilnehmer 10 des Netzwerks 2 verteilt ist, insbesondere auf alle Teilnehmer 10 des Netzwerks 2. Dies ist im Folgenden anhand der Grafik aus FIG 2 veranschaulicht.

FIG 2 zeigt die Teilnehmer 10 eines Netzwerks 2 in einer schematischen Darstellung. Jeder Teilnehmer 10 ist mit einem Datenverarbeitungssystem 18 ausgestattet, in dem - vereinfacht gesprochen - eine Datenbank 20 vorhanden ist, die in FIG 2 der grafischen Übersichtlichkeit halber identisch mit dem Datenverarbeitungssystem 18 gezeichnet ist. Es ist selbstverständlich auch möglich, dass die Datenbank 20 irgendwo innerhalb des Teilnehmers 10 gespeichert ist und das Datenverarbeitungssystem 18 hierauf Zugriff hat. Wichtig ist, dass Datenbank 20 und Datenverarbeitungssystem 18 innerhalb des jeweiligen Teilnehmers 10 vorhanden sind, ein Zugriff also ohne eine Aktivität des Netzwerks 2 bzw. eine Transaktion über ein Datenkabel 12 bzw. eine Drahtlosverbindung 14 möglich ist. Beispielsweise sind Datenverarbeitungssystem 18 und Datenbank 20 innerhalb des selben Fahrzeugs gespeichert, wobei dies für mehrere bzw. alle Teilnehmer 10 des Netzwerks gleichermaßen gilt.

Die Kommunikation im Netzwerk 2 kann per Broadcast erfolgen, insbesondere im Drahtlosnetzwerk, wie in FIG 1 durch die Drahtlosverbindungen 14 angezeigt ist. Ein solcher Broadcast kann auch über die Kabelverbindungen 12 erfolgen, sodass eine Transaktion zwischen zwei oder mehr Teilnehmern 10 allen Teilnehmern 10 öffentlich ist. Es ist jedoch ebenso gut möglich, dass Transaktionen zwischen Teilnehmern 10, also Anweisungen von einem Teilnehmer 10 an zumindest einen anderen oder im weitesten Sinne Informationen, die zwischen zwei Teilnehmern 10 ausgetauscht werden, adressiert werden und nur einem Teilnehmer 10 oder mehreren adressierten Teilnehmern 10 zur Verfügung gestellt werden, ohne dass diese Transaktion den anderen Teilnehmern 10 zugänglich gemacht wird. Wichtig ist hierbei lediglich, dass eine solche nicht öffentliche Transaktion später in einem Block 22 allen Teilnehmern 10 öffentlich gemacht wird.

Sämtliche Transaktionen zwischen Teilnehmern 10 oder solche Transaktionen im Netzwerk 2, die durch einen festgelegten Katalog als dauerhaft zu speichern katalogisiert sind, werden in einen Block 22 eingetragen, der an eine Blockkette 24 angehängt wird. In der Blockkette 24 sind daher alle Transaktionen oder alle als wesentlich erachteten Transaktionen hinterlegt, insbesondere alle zwischen Teilnehmern 10 des Netzwerks 2 ausgetauschten Informationen. Diese Blockkette 24 bildet insofern eine Datenbank 20, die alle solchen Transaktionen enthält. Die Blockkette 24 ist nicht nur allen Teilnehmern 10 des Netzwerks 2 zugänglich, sondern auch auf mehrere, insbesondere alle Teilnehmer 10 des Netzwerks 2 verteilt. Bei dem in FIG 2 dargestellten Ausführungsbeispiel besteht die Blockkette 24 aus beispielsweise derzeit drei Blöcken 22, die in der Datenbank 20 eines jeden Teilnehmers 10 gespeichert sind. Es ist jedoch auch möglich, die Blockkette 24 aufzubrechen und nur Anteile den Teilnehmern 10 einzeln zur Verfügung zu stellen, wobei es jedoch wichtig ist, dass die Teilnehmer 10 durch Zugriff auf mehrere Datenbanken 20 mehrerer Teilnehmer 10 Zugriff auf alle Blöcke 22 der gesamten Blockkette 24 haben. Am einfachsten ist jedoch die vollständige Speicherung der Blockkette 24 bei allen Teilnehmern 10.

Die Blöcke 22 der Blockkette 24 sind miteinander vernetzt. Diese Vernetzung erfolgt nicht nur durch das Aneinanderhängen, sondern dadurch, dass der Inhalt eines oder mehrerer, insbesondere aller vorangegangener Blöcke 22 zu einem Prüfcode 26 zusammengefasst im nächstfolgenden Block 22 abgelegt ist, beispielweise im Header des nachfolgenden Blocks 22. Der Prüfcode 26 kann ein Hashwert sein, der aus dem Inhalt des oder der Blöcke 22 gebildet ist. In FIG 2 ist dargestellt, wie ein erster Block 22 - links in der Blockkette 24 - eine Anzahl von Transaktionen 28 enthält, die in FIG 2 durch Punkte im Block 22 dargestellt sind. Der Inhalt des ersten Blocks 22 wird zu einem Prüfcode 26, beispielweise einem Hashwert, zusammengefasst und im nachfolgenden Block 22 abgelegt. Der zweite Block 22 ist ebenso mit Transaktionen 28 ganz oder teilweise angefüllt und enthält eben zusätzlich den Prüfcode 26. Der dritte Block 22 enthält einen Prüfcode 26, der aus dem gesamten Inhalt der vorangegangenen Blöcke 22 gebildet wird, beispielsweise ein Hashwert aus dem Inhalt aller vorangegangenen Blöcke 22. Dieser Prüfcode 26 ist wieder im Header des dritten Blocks 22 abgelegt. Auch der dritte Block 22 ist mit Transaktionen 28 ganz oder teilweise angefüllt, usw. Diese Vernetzung der Blöcke 22 hat den Vorteil, dass eine nachträgliche Veränderung des Inhalts eines Blocks 22 eine Veränderung sämtlicher Blöcke 22 der Blockkette 24 nach sich ziehen würde. Da diese Blöcke 22 jedoch in allen Teilnehmern 10 des Netzwerks 2 gespeichert sind, reicht die Veränderung der Blöcke 22 in einem Teilnehmer 10 nicht aus, sodass eine nachträgliche systematische Veränderung der Transaktionen 28 in den aneinandergereihten Blöcken 22 nur schwer möglich ist. Es ist daher für alle Teilnehmer 10 zu jedem Zeitpunkt einsehbar, welche Transaktionen 28 in der Blockkette 24 vorhanden sind, wobei auf den Wahrheitsgehalt dieser Transaktionen 28 bzw. Blöcke 22 Verlass ist.

Gelingt einem böswilligen Teilnehmer ein Software-Einbruch oder sogar ein Hardware-Einbruch in das Netzwerk 2, so ist es ihm nicht möglich, die Transaktionen 28, auf die sich das Netzwerk 2 verlässt, nachträglich zu ändern, ohne dass dieses durch Inkonsistenzen in den einzelnen Datenbanken 20 der Teilnehmer 10 auffallen würde. Eine Änderung wäre hierdurch für alle Teilnehmer 10 unmittelbar ersichtlich. Maßnahmen zur Abwehr von daraus resultierenden Folgen können getroffen werden. Auch ist es nicht möglich, dass ein böswilliger Teilnehmer sich zwischen zwei Teilnehmer 10 des Netzwerks 2 einklinkt und den beiden Teilnehmern 10 unterschiedliche Informationen zuspielt. Setzt sich beispielsweise ein Teilnehmer zwischen die Kommandozentrale 4 und einen Launcher 8 und simuliert dem Launcher 8 eine Kommandozentrale und der Kommandozentrale 4 den vermeintlichen Launcher, so würden der Kommandozentrale 4 und dem Launcher 8 unterschiedliche Informationen zugespielt werden. Diese müssten als Transaktionen 28 in den aktuellen Block 22 eingeschrieben werden, sodass den übrigen Teilnehmern 10 die Diskrepanz zwischen den Informationen bzw. Transaktionen 28 auffallen wird. Der Einbruch würde erkannt und Gegenmaßnahmen können ergriffen werden.

Zur zusätzlichen Absicherung des Systems 2 werden sämtliche Transaktionen zwischen Teilnehmern 10 mit einem privaten Schlüssel verschlüsselt, wobei jeder Teilnehmer 10 einen individuellen privaten Schlüssel aufweist. Dieser private Schlüssel ist nur dem betreffenden Teilnehmer 10 bekannt. Jeder Teilnehmer 10 erzeugt aus seinem eigenen privaten Schlüssel einen öffentlichen Schlüssel und stellt diesen dem Netzwerk 2 zur Verfügung, sodass jeder öffentliche Schlüssel auch in der Blockkette 24 hinterlegt ist. Eine Transaktion 28 zwischen zwei Teilnehmern 10 wird vom sendenden Teilnehmer 10 mit dessen privaten Schlüssel verschlüsselt und kann dann von übrigen Teilnehmern 10 bzw. dem oder den Empfängern durch den öffentlichen Schlüssel des sendenden Teilnehmers 10 entschlüsselt werden. Hierdurch kann zweifelsfrei festgestellt werden, von welchem Teilnehmer 10 die Transaktion 28 stammt. Bei einem Software-Einbruch müsste der böswillige eingebrochene Teilnehmer in den Besitz des privaten Schlüssels des Teilnehmers 10 gelangen, um im Netzwerk 2 unerkannt falsche Informationen aussenden zu können. Dies ist - bei entsprechend sicherer Hinterlegung des privaten Schlüssels eines jeden Teilnehmers 10 - schwierig. Bei einem Hardware-Einbruch kann der böswillige. Teilnehmer an den privaten Schlüssel gelangen und unerkannt Falschinformationen in das Netzwerk 2 einspeisen. Dies ist für die übrigen Teilnehmer 10 nicht sofort erkennbar, wenn der ursprüngliche Teilnehmer 10, der vom böswilligen Teilnehmer feindlich übernommen wurde, sich nicht zusätzlich im Netzwerk 2 melden kann. Ein Erkennen des böswilligen Teilnehmers kann hierbei jedoch anhand von Plausibilitätsprüfungen erfolgen, die anhand der Transaktionen 28 aus der Blockkette 24 durchgeführt werden, wie später beschrieben ist.

Zum Erstellen der Blöcke 22 existiert im Netzwerk 2 ein Algorithmus, nach dessen Regeln die Blöcke 22 erstellt werden. Auch dieser Algorithmus ist in der Blockkette 24 hinterlegt. Im dargestellten Ausführungsbeispiel teilt der Algorithmus die Rechte zur Blockerstellung unter den Teilnehmern 10 auf. Jeder der Teilnehmer 10 erhält also die Möglichkeit zur Erstellung eines Blocks 22, wobei die Reihenfolge zur Erstellung der Blöcke 22 durch den Algorithmus festgelegt ist. Bei dem in FIG 2 gezeigten Ausführungsbeispiel liegen die Rechte zum Erstellen des aktuellen Blocks beim zweituntersten Teilnehmer 10 in der rechten Spalte. Der Teilnehmer 10 füllt den von ihm erstellten Block 22 mit Transaktionen 28 und hängt den Block 22 dann wie vom Algorithmus vorgegeben an die Blockkette 24. Spätestens durch das Anhängen des aktuellen Blocks 22 an die Blockkette 24 ist der Block 22 geschlossen, sodass in ihn keine Transaktionen 28 mehr eingetragen werden können. Beispielsweise ist das Eintragen des Prüfcodes 26 der letzte Eintrag in den Block 22, bevor dieser an die Blockkette 24 angehängt wird. Der angehängte Block 22 wird an alle Teilnehmer 10 zur Abspeicherung in den Datenbanken 20 verschickt, sodass jeder Teilnehmer 10 auf dem aktuellen Informationsstand ist. Diejenigen Transaktionen 28, die in einem an die Blockkette 24 angehängten Block 22 verzeichnet sind, werden unter den Teilnehmern 10 als wahr und belastbar erachtet.

Nun erhält ein weiterer Teilnehmer 10 die Möglichkeit zur Erstellung eines Blocks 22 entsprechend der Regeln des Algorithmus. Diese Regeln können vorsehen, dass die Rechte zur Erstellung von Blöcken 22 unter den Teilnehmern 10 des Netzwerks 2 anteilig aufgeteilt werden. Bei dem in FIG 2 gezeigten Ausführungsbeispiel hat einer der Teilnehmer 10, beispielsweise die Kommandozentrale 4, einen Anteil von 40 %, wie in FIG 2 dargestellt ist. Vier weitere Teilnehmer 10 haben jeweils einen Anteil von 10 % und ein Teilnehmer 10 einen Anteil von 20 %. Die Anteile können unter den Teilnehmern 10 nach Datensicherheit der einzelnen Teilnehmer 10 vom Algorithmus festgelegt werden. Beispielsweise ist die Kommandozentrale 4 am besten geschützt und erhält den höchsten Anteil, im Ausführungsbeispiel 40 %. Ist ein Teilnehmer 10 mit der Kommandozentrale 4 verkabelt, bedeutet dies eine höhere Datensicherheit, die sich im Bemessen der Anteile niederschlagen kann. So hat beispielsweise der verkabelte Launcher 8 den Anteil von 20 %. Da das Radar 6 ein primäres Ziel für feindliche Luftangriffe ist, hat es - trotz seiner relativ hohen Datensicherheit - einen geringeren Anteil als der verkabelte Launcher 8 und damit auch nur einen Anteil von beispielsweise 10 %. Die Rechte zur Blockerstellung werden gemäß Algorithmus nach einem Pseudo-Random-Verfahren verteilt. Jeweils ist im Nachhinein für jeden Teilnehmer 10 mit einer vorherbestimmten Sicherheit möglich, die Verteilung zur Erstellung des aktuellen Blocks 22 nachzuprüfen, sodass die Verteilung der Rechte zur Erstellung des aktuellen Blocks 22 für die Teilnehmer 10 transparent ist. Zudem dürfen nur im Netzwerk 2 zugelassene Teilnehmer 10 Blöcke 22 erstellen, sind also im Algorithmus erfasst bzw. zugelassen. Auch dürfen nur die Transaktionen 28 dieser Teilnehmer 10 in die Blöcke 22 gelangen und dort gespeichert bzw. hinterlegt werden.

Bei dem in FIG 1 dargestellten Ausführungsbeispiel können insbesondere folgende Informationen als Transaktionen in der Blockkette 24 erfasst sein: Vom Radarsystem 6 erfasste Flugkörper-Bewegungsdaten, sogenannte Trackdaten, vom Kommandosystem 24 erteilte Abschüsse oder Feuerbefehle, vom Radarsystem 6 durchgeführte Identifikationen von Flugzeugen oder Flugkörpern, die Zuweisung eines Ziels an einen Launcher 8 durch die Kommandozentrale 4, Anmeldedaten von Teilnehmern 10 im Netzwerk 2, wenn diese neu in das Netzwerk 2 eintreten oder nach einer Unterbrechung wieder in das Netzwerk 2 eintreten, Zustände von Teilnehmern 10, wie die Betriebsbereitschaft, die Gefechtsbereitschaft, ein technischer Defekt, Anzahl und/oder Zustand von Abwehrraketen in Kanistern 16, geografische Orte von Teilnehmern 10 und/ oder Netzwerkregeln. Auch die Speicherung von kompletten Abläufen über Detektion, Verfolgung, Bewertung, Entscheidungen zur Bekämpfung, Bekämpfung und Damage Assessment als Transaktionen in der Blockkette 24 ist sinnvoll, um nach einer Operation jederzeit den Ablauf unverfälscht rekonstruieren zu können.

Beispielsweise kann eine Kommandozentrale 4 als Teilnehmer 10 des vernetzten militärischen Systems 2 ihre Rechte, d.h., ihre Autorisation zu bestimmten Transaktionen, durch ein entsprechendes Zertifikat belegen. Ein solches Zertifikat und/oder das Recht an sich kann eine Transaktion sein. Die Übertragung von Rechten, wozu auch die Aufnahme einer neuen Kommandozentrale 4 über ihr Zertifikat zählt, ist ebenfalls eine Transaktion, die in der Blockkette 24 gespeichert wird und dadurch unverfälschbar allen anderen Teilnehmern 10 bekannt gemacht wird. Dadurch ist z. B. die Übergabe der Befehlsgewalt an einen anderen Teilnehmer 10 abgesichert, immer nachvollziehbar und vor möglichen Intrudern geschützt.

Den Transaktionen 28 des Netzwerks 2 fundamental zugrundeliegende Grundinformationen sind in der Blockkette 24 in Grundblöcken 30 abgelegt. In FIG 2 sind zwei solcher Grundblöcke 30 durch eine fette Umrandung hervorgehoben. Diese Grundblöcke 30 sind die ersten Blöcken 22 der Blockkette 24. Es können ein oder mehrere Grundblöcke 30 erstellt werden, je nach Datenkapazität der Grundblöcke 30 und der Menge der einzuschreibenden Grundinformationen. Auch diese werden im Folgenden als Transaktionen 28 bezeichnet, auch wenn sie nicht im strengen Sinne zwischen Teilnehmern 10 ausgetauscht werden müssen.

In einem Grundblock 30 können die Teilnehmer 10 des Netzwerks 2 eingetragen sein, insbesondere abschließend. Weiter kann ein Grundblock 30 Fundamentalregeln enthalten, die nicht änderbar sind. Eine solche Fundamentalregel kann sein, dass Transaktionen nur dann in einen Block 22 aufgenommen werden können, wenn diese von einem im Grundblock 30 verzeichneten Teilnehmer 10 erzeugt wurden. Besteht die Möglichkeit, weitere Teilnehmer 10 zum Netzwerk 2 zuzulassen, dürfen auch Transaktionen von solchen zugelassenen Teilnehmern 10 in Datenblöcke 22 eingetragen werden, die an die Blockkette 24 angehängt werden.

Um eine Manipulation von Grundinformationen zu vermeiden, auf denen die gesamte Kommunikation im Netzwerk 2 später aufbaut, ist es sinnvoll, wenn ein Grundblock 30 in einer Umgebung erstellt wird, die sicherer ist als eine spätere reguläre Betriebsumgebung. Beispielsweise vernetzen sich alle Teilnehmer 10 eines zukünftigen Netzwerks 2 innerhalb eines Gebäudes 32, wie in FIG 2 angedeutet ist. Die Teilnehmer 10 können nun in geschützter Umgebung Transaktionen 28 austauschen, die in einem oder mehreren Grundblöcken 30 hinterlegt werden. Solche Transaktionen 28 können Fundamentalregeln sein, die eine Aktion eines Teilnehmers 10 und/oder eine Interaktion der Teilnehmer 10 untereinander festlegt. Eine Fundamentalregel des Netzwerks 2 kann bei zumindest einem Teilnehmer 10 hardwaregespeichert sein und wird durch die entsprechende Vernetzung von dem Teilnehmer 10, der die Fundamentalregel trägt, zum Teilnehmer 10 übertragen, der einen Grundblock 30 erstellt und diese Fundamentalregel in den Grundblock 30 einschreibt.

Alternativ oder zusätzlich ist es sinnvoll, wenn die Teilnehmer 10 sich zum Erstellen der Grundblöcke 30 ausschließlich verkabelt miteinander vernetzen, wie dies in FIG 2 angedeutet ist. Ein Einbruch in dieses verkabelte Netzwerk 2 wird hierdurch erheblich erschwert. Nach dem Erstellen der Grundblöcke 30 können die Verkabelungen ganz oder teilweise gelöst werden und es kann beispielsweise auf Drahtlosverbindungen 14 zurückgegriffen werden, wie in FIG 1 dargestellt ist. Die dann in den Grundblöcken 30 hinterlegten Grundinformationen sind korrekt, und das Netzwerk 2 kann durch einen späteren Einbruch erzeugte Fehlinformationen entdecken.

Bei einem relativ kleinen Netzwerk 2 ist das gegenseitige verkabelte Vernetzen zum Erstellen der Grundblöcke 30 und/oder das Vernetzen in einem Gebäude 32 ein sinnvoller Anfangsschutz. Ebenfalls ist es sinnvoll, dass die Teilnehmer 10 an sich in einem Grundblock 30 angegeben sind, sodass ein böswilliger Teilnehmer nicht in einfacher Weise am Netzwerk 2 teilnehmen kann, ohne als böswillig enttarnt zu werden.

Bei einem großen Netzwerk 2, das beispielsweise fluktuierende Teilnehmer 10 aufweist, die also kommen und gehen können, ist eine solche Grundvernetzung oder eine solche Erstellung von Grundblöcken 30 nicht ohne Weiteres möglich. Hier ist es sinnvoll, dass sich das System 2 erst nach dem Erstellen eines Grundblocks 30 miteinander vernetzt, insbesondere auch erst dann anfänglich vernetzt. Die Erstellung von einem oder mehreren Grundblöcken 30 obliegt beispielsweise einem sehr sicheren Teilnehmer 10, wie der Kommandozentrale 4. Dieser Teilnehmer 10 erstellt einen oder mehrere Grundblöcke 30 ohne eine Vernetzung, also in einer sehr einbruchssicheren Umgebung. Die Grundblöcke 30 enthalten dann Fundamentalregeln, die ein Zulassen und Verabschieden von neuen bzw. gehenden Teilnehmern 10 festlegen.

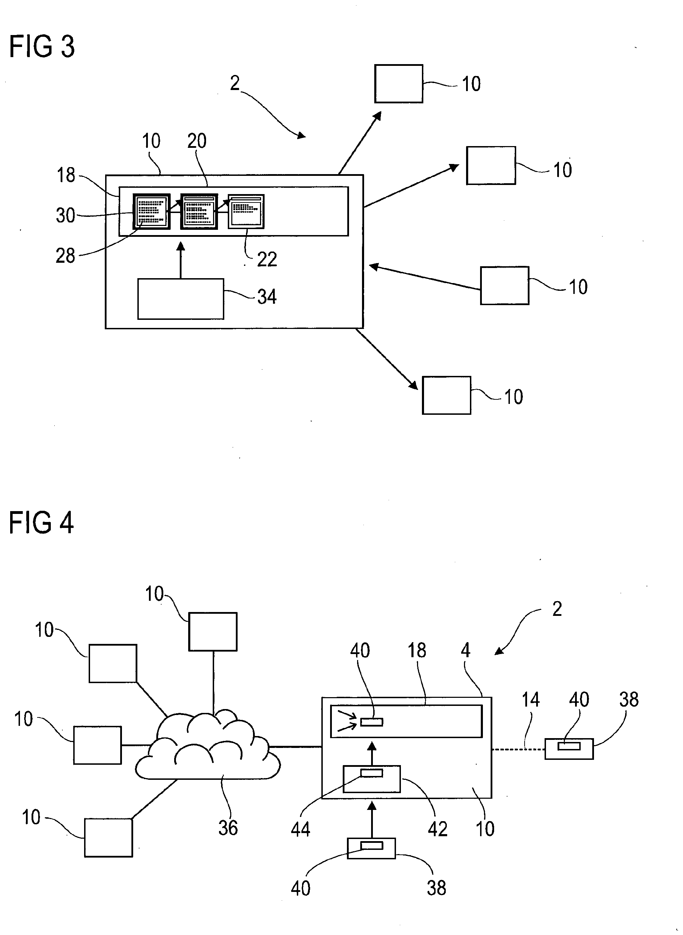

Ein solcher Prozess ist beispielhaft in FIG 3 dargestellt. FIG 3 zeigt einen Teilnehmer 10 mit einer Datenbank 20 mit Grundblöcken 30 und einem an die Grundblöcke 30 angehängten weiteren Block 22. Die Grundblöcke 30 werden auf Veranlassung eines Bedieners 34 erstellt, der hierzu einem Datenverarbeitungssystem 18 Daten zur Verfügung stellt, anhand dessen das Datenverarbeitungssystem 18 die Grundblöcke 30 erstellt. Diese werden beispielsweise durch den Bediener 34 überprüft und freigegeben.

Nach Erstellen eines oder mehrerer Grundblöcke 30 sendet der Teilnehmer 10 Anfragen an andere Teilnehmer 10, wie durch die ausgehenden Pfeile in FIG 3 angedeutet ist. Auf eine solche Anfrage hin vernetzt sich ein angefragter Teilnehmer 10 mit dem ersten Teilnehmer 10 entsprechend der in einem Grundblock 30 angegebenen Regeln. Andersherum ist es auch möglich, dass ein externer Teilnehmer 10 eine Vernetzungsanfrage an den ersten Teilnehmer 10 stellt, wie in FIG 3 durch den eingehenden Pfeil angedeutet ist. Entspricht die Anfrage bzw. der anfragende Teilnehmer 10 den Fundamentalregeln eines Grundblocks 30, so wird auch dieser Teilnehmer 10 als zugelassener Teilnehmer 10 im Netzwerk 2 akzeptiert und vernetzt. Die entsprechenden Transaktionen, also Informationen zu den Teilnehmern 10 an sich, also Eigenschaften bzw. Daten von den Teilnehmern 10, werden als Transaktionen 28 in den anschließenden Blöcken 22 hinterlegt, sodass jeder Teilnehmer 10 die anderen Teilnehmer 10 des Netzwerks 2 und deren Eigenschaften kennt. Ein solches Vorgehen ist bei großen Netzwerken 2 oder bei Netzwerken 2 mit stark fluktuierenden Teilnehmern 10 sinnvoll.

Ein Beispiel für ein solches Netzwerk 2 wird im Folgenden anhand der Darstellung aus FIG 4 erläutert. Das Netzwerk 2 umfasst eine Vielzahl von Teilnehmern 10, die insbesondere drahtlos, beispielsweise über ein Funknetz 36 und/oder das Internet miteinander vernetzt sind. Das Netzwerk 2 ist ein großes militärisches System, das als Teilnehmer 10 Personen und Fahrzeuge einschließt, sowie eine Kommandozentrale 4 und verschiedene Waffen. Das Netzwerk 2 wurde beispielsweise wie zu FIG 3 beschrieben vernetzt und ist in seinem regulären Betrieb.

Einer der Teilnehmer 10 ist ein Soldat 38, der zunächst wegen eines Urlaubs jedoch nicht Teil des Systems 2 ist. Das System 2 befindet sich beispielsweise in Afghanistan. Nach seinem Urlaub meldet sich der Soldat 38 bei einem zur Neuaufnahme in das Netzwerk 2 befugten Teilnehmer 10, in diesem Ausführungsbeispiel der Kommandozentrale 4. Er trägt einen Datenträger bei sich, auf dem sein öffentlicher Schlüssel 40 gespeichert ist. Neue Teilnehmer 10 im Netzwerk 2 können nur dann im Netzwerk als zugelassene Teilnehmer 10 Transaktionen austauschen, wenn sie durch einen zur Neuaufnahme befugten Teilnehmer 10 im Netzwerk 2 zugelassen werden. Ein solcher zur Neuaufnahme befugter Teilnehmer 10 ist zudem als solcher in einem Grundblock 30 der Blockkette 24 des Systems 2 verzeichnet.

Eine Person 42, beispielsweise ein Offizier, nimmt nun den Datenträger mit dem öffentlichen Schlüssel 40 des Soldaten 38 entgegen und führt zwei Datensätze einem Datenverarbeitungssystem 18 zu, nämlich den Datensatz mit dem Schlüssel des Soldaten 38 und einen Datensatz mit seinem eigenen öffentlichen Schlüssel 44. Der Schlüssel 44 weist die Person als autorisiert auf, einen neuen Teilnehmer 10 in das Netzwerk 2 zuzulassen.

Zu dem öffentlichen Schlüssel 40 des Soldaten 38 prüft das Datenverarbeitungssystem 18 nun anhand von Transaktionen, die in der Blockkette 24 des Systems 2 gespeichert sind, ob die Neuaufnahme des Soldaten 38 plausibel ist. Hierfür werden Informationen, die dem Soldaten 38 bzw. dessen öffentlichen Schlüssel 40 zugeordnet sind, herangezogen, wie durch die beiden Pfeile in dem Datenverarbeitungssystem 18 in FIG 4 angedeutet ist. Es zeigt sich beispielsweise, dass der Soldat 38 bereits vor vier Tagen in Frankfurt abgeflogen und vor drei Tagen in Kabul angekommen ist, mithin drei Tage brauchte, bis er zur Kommandozentrale 4 gelangte. Dieser Zeitraum ist zu lang und wird bei der Prüfung nicht zugelassen. Ein entsprechendes Ergebnis wird der Person 42 durch das Datenverarbeitungssystem 18 angezeigt. Dieser kann nun den Soldaten 38 hinsichtlich seines Verbleibens überprüfen.

Bei der Prüfung, ob ein neuer Teilnehmer im Netzwerk 2 zugelassen werden kann, werden Regeln angewendet, die in der Blockkette 24 hinterlegt sind. Diese Regeln können Fundamentalregeln oder dynamische Regeln sein. Bei dem Beispiel mit dem Soldaten 38 wird anhand von dynamischen Regeln geprüft, ob der neue Teilnehmer 10 im Netzwerk 2 zuzulassen ist. Jede dynamische Regel kann nur nach einer Fundamentalregel erstellt werden, die das Erstellen und auch wieder auflösen einer dynamischen Regel festlegt. Die im Beispiel angewandte dynamische Regel lautet, dass die negative Plausibilitätsprüfung durch eine Befragung durch eine befugte Person 42 positiv ausgeglichen werden kann, wenn die Person 42 dies für sinnvoll erachtet und eine entsprechenden öffentlichen Schlüssel 44 aufweist, die einer entsprechenden Befugnis zugeordnet ist. Diese Regel kann durch eine höher geordnete Person entsprechend einer Fundamentalregel jedoch auch verändert werden.

Es kann auch vorgesehen sein, dass die Entscheidung durch die befugte Person 42 selbst wiederum automatisiert von einem Teilnehmer 10 in Form einer höhergestellten Stelle geprüft wird. Bei diesem Teilnehmer 10 kann es sich bspw. um einen Rechner einer zentralen Kontrollinstanz handeln, der alle Transaktionen/Entscheidungen in der Blockkette 24 automatisch prüft und Ergebnisse an ein Prüfungsteam leitet.

Im gezeigten Ausführungsbeispiel wird der Soldat 38 im Netzwerk 2 zugelassen und zu einem Standort geschickt, wo er seinen Dienst verrichtet. Dort loggt er sich mit seinem öffentlichen Schlüssel 40 beispielsweise an einer Waffe ein, beispielsweise einem Launcher 8, die diesen Vorgang ins das Netzwerk 2 meldet, beispielsweise durch eine Drahtlosverbindung 14 zur Kommandozentrale 4. Diese prüft, ob ein solches Einloggen plausibel ist und gibt - falls ja - den Soldaten 38 bzw. dessen Waffen zur Kommunikation im Netzwerk 2 frei. Der Soldat 38 versieht nun seinen Dienst, bis er sich aus dem Netzwerk 2 wieder abmeldet und eine Neuzulassung im Netzwerk 2 dann wieder einer dazu befugten Person 42 notwendig macht.

### Bezugszeichenliste

- 2: System/Netzwerk
- 4: Kommandozentrale
- 6: Sensorsystem, Radarsystem
- 8: Effektorsystem, Launcher
- 10: Teilnehmer
- 12: Datenkabel
- 14: Drahtlosverbindung
- 16: Kanister
- 18: Datenverarbeitungssystem
- 20: Datenbank
- 22: Block
- 24: Blockkette
- 26: Prüfcode
- 28: Transaktion
- 30: Grundblock
- 32: Gebäude
- 34: Bediener
- 36: Funknetz
- 38: Soldat
- 40: Schlüssel
- 42: Person
- 44: Schlüssel

## Patentansprüche

1. Verfahren zum Schutz eines vernetzten militärischen Systems (2) gegenüber böswilligen Teilnehmern, bei dem Transaktionen (28) zwischen Teilnehmern (10) des vernetzten militärischen Systems (2) in einer verteilten Datenbank (20) gespeichert werden, wobei
die Transaktionen (28) in hintereinander angereihten Blöcken (22) gespeichert werden, deren Inhalt in der Weise miteinander vernetzt ist, dass in einem Block (22) ein aus zumindest einem vorangegangenen Block (26) gebildeter Prüfcode gespeichert ist,
**dadurch gekennzeichnet,**
**dass** nur in einem Grundblock (30) verzeichnete Teilnehmer (10) und zugelassene Neuteilnehmer (10) solche Datenblöcke (22) erzeugen dürfen, wobei der Grundblock (30) der erste Block der aneinander gereihten Blöcke (22) ist und ein noch nicht im Netzwerk (2) zugelassener Teilnehmer (10) nur dann im Netzwerk (2) als neuer Teilnehmer (10) zugelassen wird, wenn ein zur Neuaufnahme befugter und als solcher in einem Grundblock (30) verzeichneter Teilnehmer (10) den neuen Teilnehmer (10) zulässt.

2. Verfahren nach Anspruch 1,
**dadurch gekennzeichnet,**
**dass** die Datenbank (20) bei mehreren Teilnehmern (10) gespeichert und für alle Teilnehmer (10) einsehbar ist.

3. Verfahren nach Anspruch 1 oder 2,
**dadurch gekennzeichnet,**
**dass** das militärische System (2) Personen und Fahrzeuge als Teilnehmer (10) einschließt.

4. Verfahren nach einem der vorhergehenden Ansprüche,
**dadurch gekennzeichnet,**
**dass** das militärische System (2) ein Luftverteidigungssystem ist, das als die Teilnehmer (10) eine Kommandozentrale (4), zumindest ein Sensorsystem (6) zur Luftüberwachung und zumindest ein Effektorsystem (8) zur Abwehr von Bedrohungen umfasst.

5. Verfahren nach einem der vorhergehenden Ansprüche,
**dadurch gekennzeichnet,**
**dass** die Transaktionen (28) zumindest Information umfassen aus der Gruppe:
- von einem Sensorsystem (6) erfasste Bewegungsdaten von Bedrohungen,
- Abschüsse oder Feuerbefehle,
- Identifikation von Bedrohungen,
- Zuweisung eines Ziels an ein Effektorsystem (8),
- Anmeldedaten von Teilnehmern (10) im Netzwerk (2),
- Zustände von Teilnehmern (10),
- geografische Orte von Teilnehmern (10),
- Netzwerkregeln.

6. Verfahren nach einem der vorhergehenden Ansprüche,
**dadurch gekennzeichnet,**
**dass** eine Transaktion (28) unter den Teilnehmern (10) als wahr angesehen wird, wenn die Transaktion (28) in einem Block (22) gespeichert und der Block (22) an eine Kette (24) von Blöcken (22) angehängt ist.

7. Verfahren nach einem der vorhergehenden Ansprüche,
**dadurch gekennzeichnet,**
**dass** Grundinformation zu den Teilnehmern (10) in einem Grundblock (30) abgelegt wird, der in einer Umgebung erstellt wird, die gegenüber einer späteren regulären Betriebsumgebung geschützter ist.

8. Verfahren nach Anspruch 7,
**dadurch gekennzeichnet,**
**dass** im Grundblock (30) eine Grundgruppe von Teilnehmern (10) definiert wird.

9. Verfahren nach Anspruch 7 oder 8,
**dadurch gekennzeichnet,**
**dass** die Teilnehmer (10) bei der Erstellung des Grundblocks (30) miteinander verkabelt sind.

10. Verfahren nach Anspruch 7 oder 8,
**dadurch gekennzeichnet,**
**dass** sich die Teilnehmer (10) der Grundgruppe erst nach Erstellen des Grundblocks (30) miteinander vernetzen.

11. Verfahren nach Anspruch 10,
**dadurch gekennzeichnet,**
**dass** die Teilnehmer (10) sich zum Austausch von Zertifikaten in einer geschützten Umgebung miteinander vernetzen.

12. Verfahren nach einem der vorhergehenden Ansprüche,
**dadurch gekennzeichnet,**
**dass** die Transaktionen (28) in Blöcken (22) gespeichert werden, und die Blöcke (22) nach einem festgelegten Algorithmus erstellt werden.

13. Verfahren nach Anspruch 12,
**dadurch gekennzeichnet,**
**dass** der Algorithmus die Rechte zur Blockerstellung unter den Teilnehmern (10) anteilig aufteilt.

14. Verfahren nach Anspruch 12 oder13,
**dadurch gekennzeichnet,**
**dass** der Algorithmus die Aufteilung der Anteile unter den Teilnehmern (10) nach der Datensicherheit der einzelnen Teilnehmer (10) bemisst.

15. Verfahren nach einem der Ansprüche 12 bis 14,
**dadurch gekennzeichnet,**
**dass** der Algorithmus die Rechte zur Blockerstellung nach einem Pseudo-Random-Verfahren verteilt.

16. Verfahren nach einem der vorhergehenden Ansprüche,
**dadurch gekennzeichnet,**
**dass** die Entscheidung zur Neuaufnahme eines Teilnehmers (10) von einer Person getroffen wird.

17. Verfahren nach einem der vorhergehenden Ansprüche,
**dadurch gekennzeichnet,**
**dass** ein neuer Teilnehmer (10) nur dann im Netzwerk (2) als zugelassener Teilnehmer (10) zugelassen wird, wenn zumindest eine Plausibilitätsprüfung zum neuen Teilnehmer (10) unter Verwendung von Informationen aus Blöcken (22) einer Blockkette (24) positiv ist.

18. Verfahren nach einem der vorhergehenden Ansprüche,
**dadurch gekennzeichnet,**
**dass** die Transaktionen (28) in Blöcken (22) gespeichert werden und nur Daten von in einem Grundblock (30) verzeichneten Teilnehmern (10) und zugelassenen Neuteilnehmern (10) in diese Datenblöcke (22) eingefügt werden dürfen.

19. Verfahren nach einem der vorhergehenden Ansprüche,
**dadurch gekennzeichnet,**
**dass** Fundamentalregeln des Netzwerks (2) in einem Grundblock (30) verzeichnet sind.

20. Verfahren nach Anspruch 19,
**dadurch gekennzeichnet,**
**dass** zumindest eine Fundamentalregel die Erstellung dynamischer Regeln definiert.

21. Verfahren nach Anspruch 19 oder 20,
**dadurch gekennzeichnet,**
**dass** Fundamentalregeln des Netzwerks (2) in/bei zumindest einem Teilnehmer (10) hardwaregespeichert sind.

22. Verfahren nach einem der vorhergehenden Ansprüche,
**dadurch gekennzeichnet,**
**dass** sich die Teilnehmer (10) vernetzen und eine in einem Teilnehmer (10) gespeicherte Fundamentalregel bei der Erstellung eines Grundblocks (30) in diesen eingefügt wird.

23. Vernetztes militärisches System (2) mit mehreren Teilnehmern (10) mit Mitteln zur
Durchführung eines Verfahrens nach einem der vorhergehenden Ansprüche, bei dem Transaktionen (28) der Teilnehmer (10) untereinander in einer verteilten Datenbank (20) gespeichert sind.

## Claims

1. Method for protecting a networked military system (2) from malicious users, in which transactions (28) between users (10) of the networked military system (2) are stored in a distributed database (20), wherein
the transactions (28) are stored in blocks (22) which follow one another and the contents of which are networked to one another in such a manner that a check code formed from at least one preceding block (26) is stored in a block (22),
**characterized in that**
only users (10) registered in a basic block (30) and approved new users (10) can generate such data blocks (22), wherein the basic block (30) is the first block of the blocks (22) which follow one another and a user (10) not yet approved in the network (2) is approved as a new user (10) in the network (2) only when a user (10) authorized to accept a new user and registered as such in a basic block (30) approves the new user (10).

2. Method according to Claim 1,
**characterized in that**
the database (20) is stored with a plurality of users (10) and is visible to all users (10).

3. Method according to Claim 1 or 2,
**characterized in that**
the military system (2) includes persons and vehicles as users (10).

4. Method according to one of the preceding claims, **characterized in that**
the military system (2) is an air defence system which comprises, as the users (10), a command centre (4), at least one sensor system (6) for air monitoring and at least one effector system (8) for averting threats.

5. Method according to one of the preceding claims, **characterized in that**
the transactions (28) at least comprise information from the group of:
- movement data relating to threats which are captured by a sensor system (6),
- shots or orders to fire,
- identification of threats,
- allocation of a target to an effector system (8),
- logon data of users (10) in the network (2),
- states of users (10),
- geographical locations of users (10),
- network rules.

6. Method according to one of the preceding claims, **characterized in that**
a transaction (28) among the users (10) is considered to be genuine if the transaction (28) is stored in a block (22) and the block (22) is attached to a chain (24) of blocks (22) .

7. Method according to one of the preceding claims, **characterized in that**
basic information relating to the users (10) is stored in a basic block (30) which is created in an environment which is more protected in comparison with a subsequent regular operating environment.

8. Method according to Claim 7,
**characterized in that**
a basic group of users (10) is defined in the basic block (30).

9. Method according to Claim 7 or 8,
**characterized in that**
the users (10) are wired to one another when creating the basic block (30).

10. Method according to Claim 7 or 8,
**characterized in that**
the users (10) of the basic group are networked to one another only after the creation of the basic block (30).

11. Method according to Claim 10,
**characterized in that**
the users (10) are networked to one another for the purpose of interchanging certificates in a protected environment.

12. Method according to one of the preceding claims, **characterized in that**
the transactions (28) are stored in blocks (22) and the blocks (22) are created according to a defined algorithm.

13. Method according to Claim 12,
**characterized in that**
the algorithm proportionately divides the rights for creating blocks among the users (10).

14. Method according to Claim 12 or 13, **characterized in that**
the algorithm calculates the division of the proportions among the users (10) according to the data security of the individual users (10).

15. Method according to one of Claims 12 to 14, **characterized in that**
the algorithm distributes the rights for creating blocks according to a pseudo-random method.

16. Method according to one of the preceding claims, **characterized in that**
the decision to accept a new user (10) is made by a person.

17. Method according to one of the preceding claims, **characterized in that**
a new user (10) is approved as an approved user (10) in the network (2) only when at least one plausibility check with respect to the new user (10) using information from blocks (22) of a block chain (24) is positive.

18. Method according to one of the preceding claims, **characterized in that**
the transactions (28) are stored in blocks (22) and only data relating to users (10) registered in a basic block (30) and approved new users (10) can be inserted into these data blocks (22).

19. Method according to one of the preceding claims, **characterized in that**
fundamental rules of the network (2) are registered in a basic block (30).

20. Method according to Claim 19,
**characterized in that**
at least one fundamental rule defines the creation of dynamic rules.

21. Method according to Claim 19 or 20,
**characterized in that**
fundamental rules of the network (2) are hardware-stored in/with at least one user (10).

22. Method according to one of the preceding claims, **characterized in that**
the users (10) are networked and a fundamental rule stored in a user (10) is inserted into a basic block (30) when creating the latter.

23. Networked military system (2) having a plurality of users (10) with means for carrying out a method according to one of the preceding claims, in which transactions (28) between the users (10) are stored in a distributed database (20).

## Revendications

1. Procédé de protection d'un système militaire en réseau (2) contre des participants malveillants, procédé dans lequel les transactions (28) entre les participants (10) du système militaire en réseau (2) sont mémorisées dans une base de données répartie (20), les transactions (28) étant mémorisées dans des blocs (22) qui sont alignés les uns derrière les autres et dont le contenu est mis en réseau de telle sorte qu'un code de contrôle formé d'au moins un bloc précédent (26) est mémorisé dans un bloc (22),
**caractérisé en ce que**
seuls les participants (10) et les nouveaux participants admis (10), répertoriés dans un bloc de base (30), sont autorisés à générer de tels blocs de données (22), le bloc de base (30) étant le premier bloc des blocs alignés (22) et un participant (10) non encore admis dans le réseau (2) n'étant admis dans le réseau (2) comme nouveau participant (10) que si un participant (10) autorisé à l'accepter et répertorié en tant que tel dans un bloc de base (30) admet le nouveau participant (10).

2. Procédé selon la revendication 1,
**caractérisé en ce que**
la base de données (20) est mémorisée chez plusieurs participants (10) et peut être consultée par tous les participants (10).

3. Procédé selon la revendication 1 ou 2,
**caractérisé en ce que**
le système militaire (2) comprend des personnes et des véhicules comme participants (10).

4. Procédé selon l'une des revendications précédentes,
**caractérisé en ce que**
le système militaire (2) est un système de défense aérienne qui comprend comme participants (10) un centre de commandement (4), au moins un système de capteurs (6) destiné à la surveillance aérienne et au moins un système effecteur (8) destiné à la défense contre les menaces.

5. Procédé selon l'une des revendications précédentes,
**caractérisé en ce que**
les transactions (28) comportent au moins des informations du groupe suivants :
- des données de mouvement de menaces détectées par un système de capteurs (6),
- les destructions ou les ordres de tir,
- l'identification de menaces,
- l'affectation d'une cible à un système effecteur (8),
- des données d'inscription de participants (10) au réseau (2),
- les états des participants (10),
- les localisations géographiques des participants (10),
- les règles du réseau.

6. Procédé selon l'une des revendications précédentes,
**caractérisé en ce que**
une transaction (28) entre les participants (10) est considérée comme vraie si la transaction (28) est mémorisée dans un bloc (22) et que le bloc (22) est joint à une chaîne (24) de blocs (22).

7. Procédé selon l'une des revendications précédentes,
**caractérisé en ce que**
les informations de base concernant les participants (10) sont stockées dans un bloc de base (30) qui est créé dans un environnement qui est davantage protégé par rapport à un environnement d'exploitation régulier ultérieur.

8. Procédé selon la revendication 7,
**caractérisé en ce que**
un groupe de base de participants (10) est défini dans le bloc de base (30).

9. Procédé selon la revendication 7 ou 8,
**caractérisé en ce que**
les participants (10) sont câblés entre eux lors de la création du bloc de base (30).

10. Procédé selon la revendication 7 ou 8,
**caractérisé en ce que**
les participants (10) du groupe de base ne se mettent en réseau qu'après la création du bloc de base (30).

11. Procédé selon la revendication 10,
**caractérisé en ce que**
les participants (10) se mettent en réseau pour échanger des certificats dans un environnement protégé.

12. Procédé selon l'une des revendications précédentes,
**caractérisé en ce que**
les transactions (28) sont mémorisées dans des blocs (22), et les blocs (22) sont créés selon un algorithme spécifié.

13. Procédé selon la revendication 12,
**caractérisé en ce que**
l'algorithme répartit en parts les droits de création de blocs entre les participants (10).

14. Procédé selon la revendication 12 ou 13, **caractérisé en ce que**
l'algorithme mesure la répartition des parts entre les participants (10) en fonction de la sécurité des données des participants individuels (10).

15. Procédé selon l'une des revendications 12 à 14, **caractérisé en ce que**
l'algorithme répartit les droits de création de blocs selon un procédé pseudo-aléatoire.

16. Procédé selon l'une des revendications précédentes,
**caractérisé en ce que**
la décision d'accepter un nouveau participant (10) est prise par une personne.

17. Procédé selon l'une des revendications précédentes,
**caractérisé en ce que**
un nouveau participant (10) n'est admis dans le réseau (2) comme participant admis (10) que si au moins un contrôle de plausibilité quant au nouveau participant (10), effectué à l'aide d'informations provenant des blocs (22) d'une chaîne de blocs (24), est positif.

18. Procédé selon l'une des revendications précédentes,
**caractérisé en ce que**
les transactions (28) sont mémorisées dans des blocs (22) et seules les données des participants (10) et des nouveaux participants admis (10), répertoriés dans un bloc de base (30), peuvent être introduites dans ces blocs de données (22).

19. Procédé selon l'une des revendications précédentes,
**caractérisé en ce que**
les règles fondamentales du réseau (2) sont répertoriées dans un bloc de base (30).

20. Procédé selon la revendication 19,
**caractérisé en ce que**
au moins une règle fondamentale définit la création de règles dynamiques.

21. Procédé selon la revendication 19 ou 20, **caractérisé en ce que**
les règles fondamentales du réseau (2) sont mémorisées matériellement dans/chez au moins un participant (10).

22. Procédé selon l'une des revendications précédentes,
**caractérisé en ce que**
les participants (10) se mettent en réseau et une règle fondamentale mémorisée dans un participant (10) est introduite dans un bloc de base (30) lors de la création de celui-ci.

23. Système militaire en réseau (2) comprenant plusieurs participants (10) pourvus de moyens de mise en œuvre d'un procédé selon l'une des revendications précédentes dans lequel les transactions (28) des participants (10) entre eux sont mémorisées dans une base de données répartie (20).
